(19) Europäisches Patentamt

European Patent Office

Office européen des brevets

(11) **EP 1 111 515 A2**

(12) **EUROPÄISCHE PATENTANMELDUNG**

(43) Veröffentlichungstag:
 **27.06.2001 Patentblatt 2001/26**

(51) Int Cl.⁷: **G06F 17/30**

(21) Anmeldenummer: **00128026.2**

(22) Anmeldetag: **20.12.2000**

(84) Benannte Vertragsstaaten:
 **AT BE CH CY DE DK ES FI FR GB GR IE IT LI LU
 MC NL PT SE TR**
 Benannte Erstreckungsstaaten:
 **AL LT LV MK RO SI**

(30) Priorität: **24.12.1999 DE 19963123**

(71) Anmelder: **Noll, Uwe
 64285 Darmstadt (DE)**

(72) Erfinder:
 • **Dratsch, Valerie
  195271 St. Petersburg (RU)**
 • **Noll, Uwe
  64285 Darmstadt (DE)**

(74) Vertreter: **Gornott, Dietmar, Dipl.-Ing.
 Zilleweg 29
 64291 Darmstadt (DE)**

(54) **Analytisches Informationssystem**

(57) Es wird ein analytisches Informationssystem zum Erkennen von Mustern in Datenbanken beschrieben, wobei die Mustererkennung mit Hilfe von Diffenzvektoren vorgenommen wird. Als Kriterium für das Aufkommen neuer Muster wird ein Signifikanzvektor ausgewertet. Die neu ermittelten Muster dienen zur Erstellung von Steuerparametern.

Fig. 1

**Beschreibung**

Die Erfindung betrifft ein analytisches Informationssystem, wie es im Oberbegriff des Patentanspruchs 1 dargestellt ist.

Durch die Möglichkeit umfangreiche Datenmengen preisgünstig abspeichern zu können, werden in der heutigen Zeit alle möglichen Daten erfaßt und in Datenbanken abgelegt. Gleichzeitig stellt sich die Frage nach einer sinnvollen Auswertung dieser Daten und dem Kenntlichmachen der dort vorhandenen wertvollen Informationen z.B. Abhängigkeiten oder Muster, die dann zur Steuerung von Verfahrensabläufen eingesetzt werden können. Eine sinnvolle Auswertung dieser enormen Datenmengen zum Feststellen von Abhängigkeiten der Daten untereinander oder Auffälligkeiten und deren grafische Darstellung ist auch bei den heute zur Verfügung stehenden enormen Rechnerleistungen in einem angemessenen Zeitraum nur mittels moderner schneller Datenbankalgorithmen, statistischer Auswertungsverfahren und an die Auswertung großer Datenmengen besonders angepaßter Rechnerarchitekturen bzw. -systeme möglich. Diese Forderung hat dann zu den analytischen Informationssystemen geführt, die besonders für diese Verarbeitung von Daten und ihrer Visualisierung ausgelegt sind. Herzstück derartiger Systeme ist ein Datenanalyseverfahren, welches zum Ziel hat, aus großen Datenmengen, insbesondere Unternehmensdaten, durch Ermittlung bestimmter Muster oder Ähnlichkeiten Strukturen bzw. funktionale Abhängigkeiten ("Modelle") in den Daten aufzuzeigen. Über analytische Informationssysteme und die dort eingesetzten Verfahren gibt es eine Reihe von Veröffentlichungen wie z. B. P. Chamoni, P. Gluchowski: Analytische Informationssysteme, Springer-Verlag. Wichtig ist bei derartigen Systemen, daß die Auswertungen weitgehend automatisch ablaufen und nur in einem eingeschränktem Maße spezielles Knowhow eines Benutzers notwendig ist.

Insgesamt geht es bei analytischen Informationssystemen um das Aufspüren von komplexen Ähnlichkeiten in großen, regelmäßig hochdimensionalen Datenmengen, um die Zuordnung eines hochdimensionalen, nicht intuitiv erfaßbaren Datensatzes zu einem greifbaren, "lebensnahen" Parameter ("Modell") sowie um die Prognose einer zukünftigen Entwicklung aus den vorhandenen komplexen Daten. Dazu werden die Daten nach abstrakten mathematischen Vorschriften verarbeitet, wobei Mustererkennung und -zuordnung in hochdimensionalen Räumen die Grundlage bilden. Die analytischen Informationssysteme werden eingesetzt zur Lösung bzw. Untersuchung technischer Fragestellungen und können aber auch bei wirtschaftlichen Abfragen insbesondere Analyse einer Einkaufsdatenbank, wirtschaftlichen Prognosen, Erstellung von Lieferanten- oder Kundenprofilen eingesetzt werden.

In der US 5761389 ist ein analytisches Informationssystem beschrieben, bei dem auf relativ einfache Weise nach Vorgaben eines Benutzers Abhängigkeiten von Daten untereinander in Regeln gefaßt und grafisch dem Benutzer zur Verfügung gestellt werden. Hierbei werden weitgehend automatisch Daten, die keine Auswirkung auf diese Regeln haben, aussortiert, und es werden mittels statistischer Berechnungsmethoden und moderner Datenbankalgorithmen Regeln abgeleitet, die dann auf einem Ausgabegerät dargestellt werden. Hierbei bestehen diese Regel aus IF-THEN-Bedingungen. Zur Überprüfung dieser Regeln wird der Benutzer in Zwischenschritten aufgefordert, die Regeln einer Bewertung zu unterziehen. In der US 5940815 ist eine Weiterentwicklung des aus der US 5761389 bekannten Systems beschrieben, wobei durch Clusterbildung versucht wird, das Auswertungsverfahren noch schneller und genauer zu gestalten. Beide Systeme wurden entwickelt, um Ursachen von bei Massenherstellung auftretenden Fehlern zu erkennen, damit durch gezielten Eingriff in den Herstellungs- oder Entwicklungsprozeß die Qualität verbessert werden kann. Ein weiteres Einsatzgebiet ist das Vorhersagen in Bezug auf Geschäftsverhalten von bestimmten Personengruppen.

Nachteilig bei beiden Systemen ist, daß die Genauigkeit noch sehr gering ist, daß der Benutzer sehr stark eingebunden ist, so daß die Qualität wesentlich von dessen Knowhow abhängig ist, und daß noch erhebliche Rechnerleistung und Zeit zur Auswertung notwendig sind.

Der Erfindung liegt nun die Aufgabe zugrunde, das aus dem Stand der Technik nach der US 5761389 bekannte System derart zu verbessern, daß Abhängigkeiten von gespeicherten Daten untereinander noch schneller erkannt und ausgewertet werden.

Diese Aufgabe wird durch die kennzeichnenden Merkmale des Anspruchs 1 gelöst. Hierbei geht die erfindungsgemäße Lösung von einem völlig anderen Ansatz aus, da durch Berechnung von Raumvektoren und deren Differenzen Strukturen, Muster bzw. Ähnlichkeiten ermittelt werden.

Zweckmäßige Weiterbildungen sollen in den abhängigen Ansprüchen unter Schutz gestellt werden.

Der Vorteil des vorgeschlagenen Informationssystems liegt darin, daß nur die Analysekomponente verändert wird, so daß schon vorhandene Bauteile (Subsysteme) weiter benutzt werden können; dies erhöht auf einfache Weise zusammen mit der Zunahme der Analyseschnelligkeit die Wirtschaftlichkeit. Ferner ist vorteilhaft, daß Datenproben aus einem vorselektierten Datenwertebereich genommen und ihre Bedeutung hinsichtlich der Änderung im zu untersuchenden Muster untersucht werden. Überdies wird eine große Leistungssteigerung erreicht, da nur Analyseprozesse mit einer hohen Wahrscheinlichkeit auf Erfolg angestoßen und einfache mathematische Transformationen im Vergleich zu den bekannten analytischen Informationssystemen eingesetzt werden.

Besonders vorteilhaft ist auch, daß gemäß einer der abhängigen Ansprüche die zeitlichen Änderungen der Daten in den einzelnen Strukturen, Mustern bzw. Ähnlichkeiten analysiert und daraus Regelparameter für einen neuen Startzeitpunkt zur erneuten Ermittlung der Raumvektoren und damit Strukturen, Modelle bzw. Muster abgeleitet werden.

Die technische Lösung wird anhand einer Ausführungsform beispielhaft erläutert.

Es zeigen :

Figur 1: Darstellung des Verfahrensablaufs innerhalb eines analytischen Informationssystems,
Figur 2: Aufbau des Analysesystems innerhalb eines analytischen Informationssystems,
Figur 3: allgemeine Darstellung der Zuordnung von Datenabfrage und Vektoren einer Datenstichprobe,
Figur 4: Beispiel für die Auswertung gemäß Schritt 1 in Figur 6,
Figur 5: Beispiel für die Auswertung gemäß Schritt 2 in Figur 6 und
Figur 6: : Diagramm des Verfahrensablaufes in der Analysekomponente.

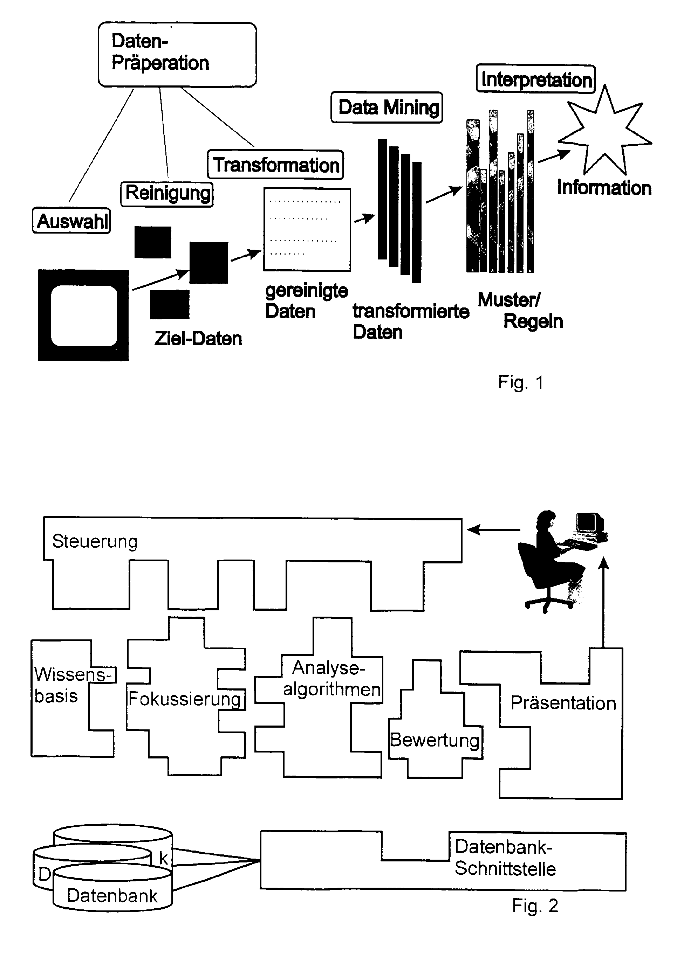

In Figur 1 ist der Verfahrensablauf innerhalb eines analytischen Informationssystems dargestellt. Der Verfahrensablauf ist in drei Hauptgruppen einzuteilen: 1. Datenpräparation, 2. Analyse (Data-Mining) und 3. Information (Interpretation).

1. Datenpräparation: Die Daten mit ihren Werten (z.B. Preis = 10,-DM, Menge = 2, Liefertermin = 10.06.1968) für das analytische Informationssystem liegen in der Regel über mehrere Datenbanken unter den unterschiedlichsten Formaten verstreut vor; zudem sind manchmal redundante Daten und für die nachfolgende Analyse nicht wichtige Daten in den Datenbanken vorhanden und auch unterschiedlichste Schreibweisen können dabei sein. Für eine schnelle und aussagekräftige Analyse werden deshalb in diesem Verfahrensschritt, die Daten einer vorbereitenden Bearbeitung unterzogen. Hierzu müssen redundante Daten, Daten mit gleichen Informationsgehalt, aber z.B. anderer Schreibweise ( Stefanie oder Stephanie), und unterschiedlichen Formaten erkannt und vereinheitlicht werden. Gleichzeitig müssen für die Auswertung nicht wichtige Daten ausgefiltert werden. Für den anschließenden Verfahrensschritt liegt dann eine einheitliche Datenbankstruktur bzw. Bezugsbasis vor. Diese Datenbankpräparation geschieht zum größten Teil automatisch, wobei nur noch bestimmte Ergebnisse dem Benutzer angezeigt werden. Hierzu gibt es schon zahlreiche zum Stand der Technik gehörende Verfahren; sie werden zum Teil im Zuge der Herstellung von unter dem Schlagwort "Data-Warehouse" oder "Data-Marts" in den Unternehmen vorliegenden Datenbanken derartige Verfahren eingesetzt.

2. Analyse (Data-Mining): Diese Hauptgruppe ist der wichtigste Verfahrensschritt in einem analytischen Informationssystem, da hier Strukturen, Muster oder Ähnlichkeiten in den Daten (z.B. Preis, Menge, Liefertermin) herausgefiltert werden. Diese gefundenen Strukturen, Muster oder Ähnlichkeiten dienen als Eingangsgrößen für die nachfolgend beschriebene Information. Anhand von Figur 2 wird die Analyse weiter unten ins Einzelne gehend erläutert.

3. Information (Interpretation): Die im zweiten Verfahrensschritt gefundenen Strukturen, Muster oder Abhängigkeiten müssen interpretiert werden, damit sie als Einflußgrößen (Parameter) in einem Regelprozeß eingebunden werden können. Dies erfolgt entweder automatisch, um z.B. ein Herstellungsverfahren zu optimieren, oder es wird grafisch dargestellt, um einen Bearbeiter zu Aussagen anzuregen.

Die Figur 2 zeigt das allgemeine Modell eines analytischen Informationssystems (Data-Mining-Systems); hierbei wird vorausgesetzt, daß die zur Verfügung stehenden Daten schon teilweise aufbereitet wurden. Das Modell zerfällt in mehrere Komponenten, die trotz der sehr unterschiedlichen Struktur von Erkennungssystemen für Datenmuster, -ähnlichkeiten oder -strukturen typische Basisfunktionen darstellen. Die erste Komponente ist die Steuerung, die einfache Befehle z.B. Fragen nach Abhängigkeiten vom Anwender erhält und die Ablaufsteuerung der anderen Komponenten übernimmt. Die zweite Komponente ist die Datenbankschnittstelle, über welche das System mit aufbereiteten Datenbankextrakten versorgt wird (s.o. Datenpräparation). In der dritten Komponente, der Wissensdatenbank, ist das vorhandene s. g. Domänenwissen gespeichert, wo es für die Konfiguration der übrigen Komponenten zur Verfügung steht. Unter Domänenwissen sind Kriterien zu verstehen, anhand derer bestimmte Auffälligkeiten ausgesondert werden können, die auch durch einfache Datenbankabfragen oder statistischen Abfragen zu erhalten sind. Dies sind z. B. Trivialitäten, Redundanz, Bedeutungslosigkeit, Bekanntheit und Irrelevanz. In Datenbanken sind eine Menge von Daten gespeichert, deren Wichtigkeit für eine vorgesehene Analyse abgeschätzt werden muß, um nicht in einer Datenflut unterzugehen. Die vierte Komponente, die Fokussierung, übernimmt diese Aufgabe und trennt die Daten, die für eine vorgesehene Analyse bedeutend sind und der Analyse zugrunde gelegt werden, von den nicht wichtigen Daten. Diese Komponente fällt damit noch unter Datenpräparation. Den Kern des Systems bildet aber die fünfte Komponente, in der die zu verwendeten Analysealgorithmen abgelegt sind, und die aus den Datenbankextrakten Auffälligkeiten herausfiltern und an die sechste Komponente, die Bewertung, weitergibt. Dort werden die gefundenen Strukturen, Muster, Modelle, Ähnlichkeiten auf ihre Interessantheit und Nützlichkeit anhand von in der Wissendatenbank gespeicherten Kriterien geprüft und funktionale Abhängigkeiten ermittelt. Die gefundenen Ergebnisse sind in der vorliegenden Form in der Regel nur schwer weiter zu benutzen; sie müssen aufbereitet werden. Entweder werden sie für eine Steuerung in Eingangsparameter umgewandelt oder für einen Benutzer wird eine Präsentation erstellt, bei der Auffälligkeiten leicht zu erkennen sind. Diese Aufgabe übernimmt die siebte Komponente, die Präsentation.

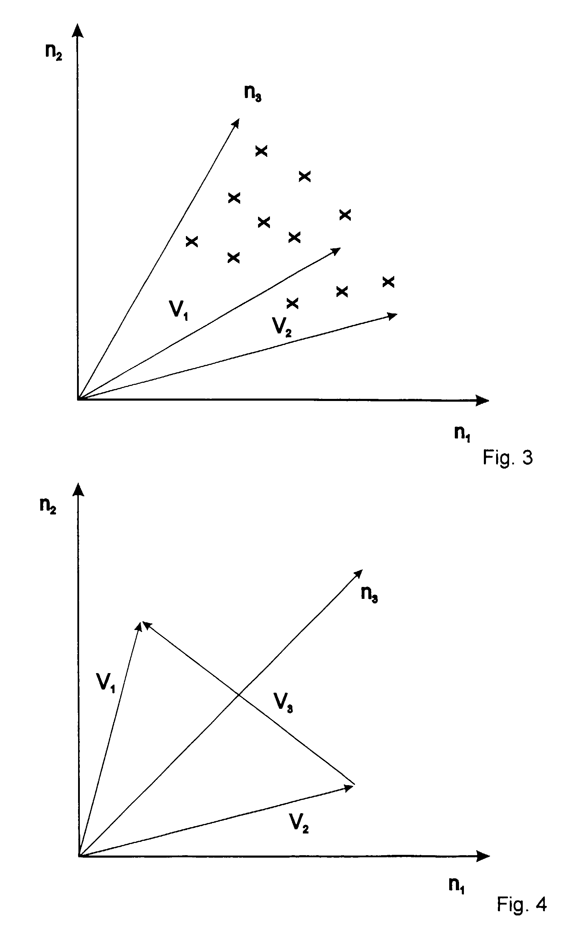

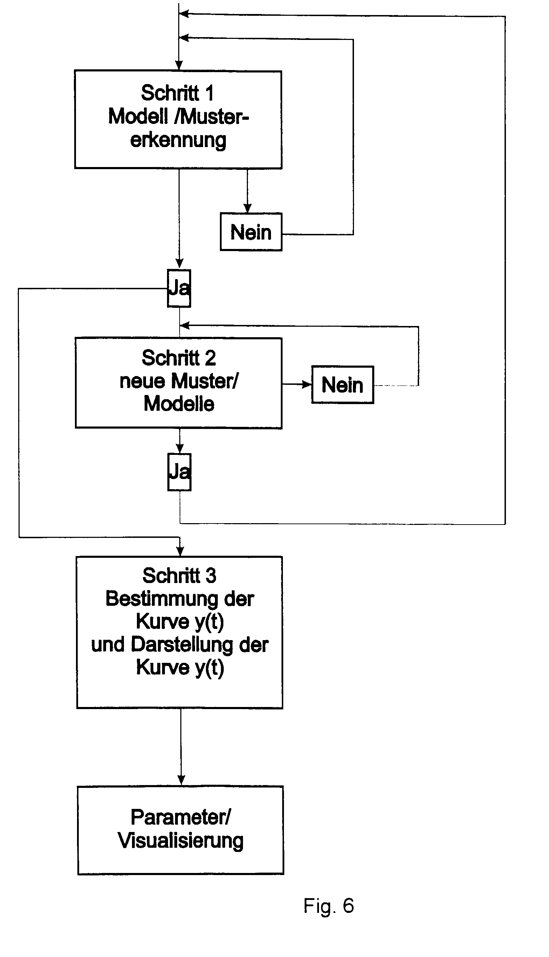

Nachfolgend wird das wesentliche Modul, das in Figur 1 mit Data Mining gekennzeichnet ist, anhand der Figuren 3-6 erläutert. Die Daten mit ihren Werten z.B. Preis = 10,- DM, Menge = 3, Liefertermin = 10.05.1968, die der Analyse zugrunde gelegt werden sollen, sind in Datenbanken abgelegt, in denen auch die Zuordnung der einzelnen Daten abgespeichert sind. Die Datenbanken enthalten die Daten in form von Datenattribute mit Attributsbezeichnung und Wert, hierbei bilden die Werte verschiedener Datenattribute mit gleicher Zuordnung die s. g. Datenrecords. Die Daten stehen dem analytischen System über die Datenbankschnittstelle zur Verfügung. Über die Steuerung gibt der Benutzer Abfragen bzw. Modelle ein; unter Abfragen bzw. Modelle sind hier Abhängigkeiten zu verstehen. Diese Abfragen lassen sich als Vektoren in einem n-dimensionalen Raum darstellen, wobei die Koordinaten dieses Raumes durch die Datenattribute (z.B. $n_1$= Preis, $n_2$=Menge, $n_3$=Liefertermin) gebildet werden. Figur 3 zeigt dies für ein 3-dimensionales Abfragebeispiel; die Abfrage ist als Vektor $V_1$ dargestellt. Aus den für einen bestimmten Zeitpunkt zur Verfügung gestellten Daten wird eine Stichprobe von 10% der vorhandenen Daten genommen; die Daten dieser Probe werden anhand in der Wissensdatenbank gespeicherter Erfahrungswerte für einen Wertebereich ausgewählt, in deren Mittelpunkt die Abfrage sich befindet. Da die Daten der Stichprobe ebenfalls mehrdimensional sind, lassen sie sich als Vektoren $V_2$ darstellen und begrenzen einen Raumkörper um den Abfragevektor $V_1$. In Figur 3 ist dies für einen 3-dimensionalen Raum dargestellt; die Daten der Stichprobe sind durch Kreuze gekennzeichnet und bilden eine Raumwolke, um den Abfragevektor $V_1$. Die Untersuchung, inwieweit sie mit den Modellen oder Abfragen übereinstimmen (Figur 6, Schritt 1), wird anhand des sich ergebenen Differenzvektors $V_3$ ermittelt, dessen Betrag in der Datenbank ebenfalls abgelegt wird (Figur 4). Sind alle Differenzvektoren $V_3$ der Stichprobe ermittelt worden, wird die Verteilungsfunktion der Häufigkeit der Beträge dieser Differenzvektoren $V_3$ untersucht. Hierbei wird ermittelt, ob diese Verteilungsfunktion einer der bekannten statistischen Funktionen wie Gauß-, Poisson-, Binominal-, Raleigh-, Lorentz-, Gamma-Weilbull-Funktionen usw. folgt. Die Ermittlung der Funktionen erfolgt in der Regel über die Potenzmomente; hierzu werden die Momentenkoeffizienten der Schiefe und die Momentenkoeffizienten der Wölbung berechnet. Anhand des Vorzeichens und des Wertes dieser Koeffizienten kann die Art der Funktion bestimmt werden. Die Berechnungsverfahren sind bekannt und z.B. in Lothar Sachs: Angewandte Statistik auf Seite 169 beschrieben. Führt die Untersuchung zu einem Ergebnis, wird versucht, den Modellvektor $V_1$ derart anzupassen, daß eine sehr gute Übereinstimmung erreicht wird. Das erdachte Modell findet sich in den Daten der Datenbank wieder. Wird festgestellt, daß keine der bekannten Verteilungsfunktionen die ermittelte Verteilungsfunktion der Häufigkeit des Betrages des Differenzvektors $V_3$ wiedergibt, wird das beschriebene Verfahren mit einer etwas umfangreicheren Stichprobe z.B. 20% wiederholt. Das Verfahren wird solange mit erweiterten Stichproben durchgeführt, bis entweder die ermittelte Verteilungsfunktion einer der bekannten Verteilungsfunktion folgt oder alle zur Verfügung stehenden Daten untersucht wurden. Führt der Vergleich zum Ergebnis, daß keine der bekannten Verteilungsfunktion die ermittelte Verteilungsfunktion nachbildet, wird zuerst durch asymptopische Zerlegung versucht, Normalverteilungsfunktionen zu ermitteln, durch die die ermittelte Verteilungsfunktion annähend nachgebildet werden kann. Derartige asymptopische Zerlegungsverfahren sind allgemein bekannt. Ist auch dies nicht möglich, müssen andere Anfangsmodelle vom Benutzer eingegeben werden. Das untersuchte Anfangsmodell ist in den untersuchten Daten nicht aufzufinden. Die Ergebnisse der Modelluntersuchungen werden dem Benutzer angezeigt und in der Datenbank abgespeichert. Es besteht aber auch die Möglichkeit, daß in dem Data-Mining-System Abfragen bzw. Modelle automatisch aufgrund von in der Wissensdatenbank (dritte Komponente) abgespeicherten Vorgaben kreiert werden.

In die Datenbanken, auf die das analytische Informationssystem zugreift, werden fortlaufend neue Daten aufgenommen oder alte durch neue Daten ersetzt. Hierdurch ergibt sich, daß neue Strukturen, Modelle bzw. Muster entstehen und ältere Strukturen, Muster bzw. Modelle ersetzt oder ergänzt werden. Zur Feststellung, ob neue Strukturen, Muster bzw. Modelle entstanden sind, führt das analytische Informationssystem in regelmäßigen Zeitschritten $\triangle t$ eine Überprüfung der Datenbankänderungen durch (Figur 6, Schritt 2). Für jede der Datenattribute (Dimension) wird die Häufigkeit der Verteilung einzelner Werte ermittelt; hierbei wird davon ausgegangen, daß diese Werte der gleichen Verteilungsfunktion wie die Beträge der Differenzvektoren $V_3$ folgen . Um festzustellen, ob neue Strukturen, Muster oder Modelle entstanden sind, wird der Mittelwert im neuen Zeitpunkt ermittelt. Zeigt es sich, daß die Mittelwerte sehr unterschiedlich sind d.h. die Differenz der Mittelwerte überschreitet einen bestimmten Grenzwert (d.h. er liegt nicht mehr im 95% Vertrauensintervall), wird davon ausgegangen, daß neue Muster- bzw. Modelle entstanden sind. In dem anderen Fall wird ein weiterer Zeitschritt $\triangle t$ abgewartet.

Die Feststellung, daß neue Muster bzw. Modelle entstanden sind, wird noch einmal überprüft. Hierbei wird, wenn von Normalverteilung in beiden Fällen (Differenzvektorverteilung und Verteilung der Häufigkeit der Werte der Datenattribute) ausgegangen wird, ein Signifikanzwert T für jede Datenattributstabelle bestimmt. Dieser läßt sich nach folgender Formel berechnen:

$$T = \frac{A-B}{S\sqrt{\frac{1}{n_1} + \frac{1}{n_2}}}$$

mit

$$S = \sqrt{\frac{(n_1-1)VAR(A)+(n_2-1)VAR(B)}{n_1+n_2-2}}$$

Hierbei bedeutet:

A: Mittelwert aller Daten aus einer Datenattributstabelle A zu einem Zeitpunkt $t_1$,
B: Mittelwert aller Daten aus einer Datenattributstabelle A zu einem Zeitpunkt $t_2 = t_1 + \triangle t$,
$n_1$: Anzahl der Datensätze der Datenattributstabelle A zum Zeitpunkt $t_1$,
$n_2$: Anzahl der Datensätze der Datenattributstabelle A zum Zeitpunkt $t_2$,
VAR(A): Varianz der Mittelwerte der Datenattributstabelle A und
VAR(B): Varianz der Mittelwerte der Datenattribute B.

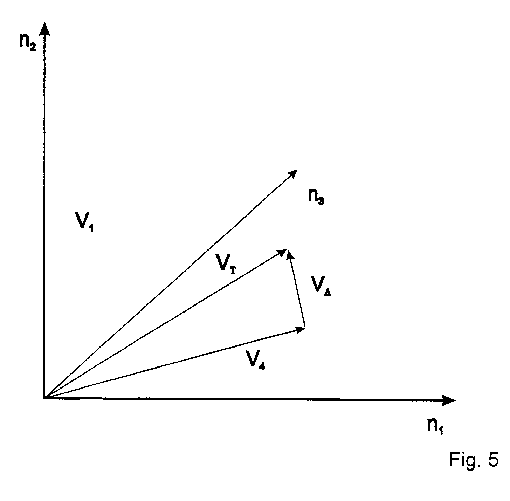

Die Signifikanzwerte T lassen sich in einem n-dimensionalen Raum wieder als Vektor, in Figur 5 mit $V_T$ bezeichnet, darstellen und mit einem empirisch ermittelten Grenzvektor $V_4$ vergleichen, der den optimalen Grenzwert für das Entstehen neuer Muster angibt (Figur 5). Der durch den Vergleich ermittelte Differenzvektor $V_\triangle$ gibt an, wie hoch die Wahrscheinlichkeit für das Entstehen neuer Muster oder Modelle ist. Überschreitet dieser Differenzvektor $V_\triangle$ einen bestimmten Betrag, wird ein neuer Mustererkennungsvorgang gestartet (Figur 6).
Ein anderer zusätzlicher Test ist der Chi-Quadrat-Test ($\chi^2$-Test); hierbei wird die Kennzahl $\chi^2$ nach folgender Formel ermittelt:

$$\chi^2 = \sum_{i=1}^{k} \frac{\left(B_i - E_i\right)^2}{E_i}$$

mit

$B_i$: festgestellte Häufigkeit eines Differenzvektorbetrages,
$E_i$: erwartete Häufigkeit des Differenzvektorbetrages und
k : Anzahl der Unterteilungen der Häufigkeitsverteilung.

Ergibt die Auswertung, daß der Wert der Kennzahl $\chi^2$ einen bestimmten Grenzwert überschreitet, hat sich eine neues Muster oder eine neue Struktur entwickelt und ein neuer Mustererkennungsvorgang wird angestoßen.
Die neuen Modelle bzw. Muster werden zusammen mit ihren Daten und dem Zeitpunkt der Daten in der Datenbank abgespeichert und stehen somit der 5. Komponente, der Bewertung, zur Verfügung.
In der 5. Komponente erfolgt nun die in Figur 6 als Schritt 3 bezeichnete Auswertung der ermittelten Strukturen, Modelle, Muster über der Zeit. Hierzu wird versucht, einen funktionalen Zusammenhang zu ermitteln. Der zeitliche Verlauf dieser Muster bzw. Modelle wird in der Regel dem Benutzer als Diagramm über die Zeit mitgeteilt. Diese Darstellung bietet schon die Möglichkeit zur Analyse. Wichtig sind aber ebenso Aussagen über Abhängigkeiten zwischen diesen zeitlichen Modellen, die nicht durch die abgespeicherten Datenattribute begründet sind. Um eine derartige Abhängigkeit zu erfassen, müssen aber die Werte vergleichbar sein. Dies geschieht durch eine Normierung der Daten eines Datenattributes auf den jeweils größten Wert. Dann sind alle Daten dimensionlos und liegen im Wertebereich 0 bis 1. Anhand der ermittelten Diagramme wird versucht, eine gemeinsame Raumkurve zu finden, hierzu gibt es aus dem Stand der Technik verschiedene Vorgehensweisen. Die zu findende Raumkurve läßt sich allgemein für drei Dimensionen durch folgende Formel beschreiben:

$$Y(t) = a\, n_1(t) + b\, n_2(t) + c\, n_3(t)$$

Hierbei bedeuten :

| | |
|---|---|
| a, b, c | Konstanten oder Werte von Funktionen, |
| $n_1(t), n_2(t), n_3(t)$ | Funktionen der ermittelten Muster nach der Zeit und |
| t | Zeit. |

Bestimmen läßt sich diese Raumkurve durch digitale Filter, die bestimmte Polynome ermitteln. Die Konstanten bzw. zeitunabhängige Funktionen a, b, c können vom Benutzer, je nachdem welche Bedeutung die Datenattribute für ihn haben, noch verändert werden. Die ermittelte zeitabhängige Raumkurve wird danach von der Präsentationseinheit, 7. Komponente, in für eine Steuerung zu verarbeitende Parameter umgewandelt oder für einen Benutzer in einer Ausgabeeinheit dargestellt. Ferner kann auch durch Extrapolation eine Aussage über den zukünftigen Verlauf mit einer bestimmten Zuverlässigkeit ermittelt werden, welche ebenfalls in eine Steuerung einfließen kann. Derartige Extrapolationsverfahren gehören zum Stand der Technik.

**Patentansprüche**

1. Analytisches Informationssystem mit folgenden Komponenten:

   - einer Steuerung zur Ablaufkonfiguration und Parametrierung weiterer Komponenten,
   - einer Datenbankschnittstelle, über die das analytische Informationssystem mit verschiedenen Datenbanken verbunden ist,
   - einer Wissensdatenbank, in der Ausschlußkriterien, Schwellwerte und funktionale Abhängigkeiten abgelegt sind,
   - einer Fokussierungskomponente zur Festlegung, welche Teile von Daten analysiert werden,
   - einer Analysekomponente zum Ermitteln von Strukturen, Auffälligkeiten und Ähnlichkeiten in den Daten,
   - einer Bewertungskomponente für in der Analysekomponente ermittelten Strukturen, Auffälligkeiten, Ähnlichkeiten unter Zuhilfenahme der in der Wissensdatenbank abgelegten Kriterien und
   - einer Komponente zur Parameteranpassung für nachfolgende Steuerungen und/oder Ausgabegeräte,

   dadurch gekennzeichnet,
   daß in der Analysekomponente zur Strukturermittlung folgendes erstes Erkennungsverfahren eingesetzt wird:

   - Überführung einer vorgegebenen Datenabfrage in einen ersten Vektor ($V_1$) mit Raumkoordinaten ($n_1$, $n_2$, $n_3$), die durch die Datenattribute vorgegeben sind,
   - Überführung der über die Fokussierungskomponente und der Datenbankschnittstelle erhaltenen Daten einer ersten Stichprobe in Vektoren ($V_2$) gleicher Dimensionen wie der erste Vektor ($V_1$),
   - Ermitteln und Abspeichern der Beträge der Differenzvektoren ($V_3$) von dem ersten Vektor ($V_1$) und den Vektoren ($V_2$) der Stichprobe,
   - Bestimmen der Verteilungsfunktion der Häufigkeit der ermittelten Beträge der Differenzvektoren ($V_3$),
   - Wiederholung des ersten Erkennungsverfahren mit einer neuen erweiterten Stichprobe bei Nichtermitteln einer Verteilungsfunktion und
   - Abspeicherung der gefundene Struktur in der Wissensdatenbank oder nach Untersuchung aller Datenwerte Abbruch des Verfahrens bzw. Neubeginn des Erkennungsverfahrens mit einer neuen Datenabfrage,

2. Analytisches Informationssystem nach Anspruch 1, dadurch gekennzeichnet,
   daß mittels CHI-Quadrat-Funktion ($\chi^2$-Funktion) die Verteilungsfunktion der Häufigkeiten der Beträge der ermittelten Differenzvektoren ($V_3$) untersucht wird.

3. Analytisches Informationssystem nach Anspruch 2, dadurch gekennzeichnet,
   daß bei der Ermittlung einer Normalverteilung für die Beträge der Differenzvektoren ($V_3$) in der Analysekomponente nach vorgegebenen Zeitschritten $\triangle t$ ein zweites Erkennungsverfahren mit den Verfahrensschritten erfolgt:

   - Bestimmen von Signifikanzwerten T für die Datenattribute, die dem ersten Erkennungsverfahren zugrunde liegen,
   - Überführen der Signifikanzwerte T in einen Signifikanzvektor (VT) mit Raumkoordinanten ($n_1$, $n_2$, $n_3$), die durch die Datenattribute vorgegeben sind,

- Bestimmen des Betrages der Differenz zwischen Signifikanzvektors (VT) und einem zweiten empirisch gefundenen Grenzvektor ($V_4$) und

- Wiederholung des ersten Erkennungsverfahren bei Überschreiten eines zweiten Schwellwertes.

4. Analytische Informationssystem nach Anspruch 3, dadurch gekennzeichnet,
daß die Signifikanzwerte T nach folgender Formel ermittelt werden:

$$T = \frac{A-B}{S\sqrt{\dfrac{1}{n_1} + \dfrac{1}{n_2}}}$$

mit

$$S = \sqrt{\frac{(n_1-1)VAR(A)+(n_2-1)VAR(B)}{n_1+n_2-2}}$$

5. Analytisches Informationssystem nach einen der vorgehenden Ansprüche, dadurch gekennzeichnet,
daß in der Auswertekomponente nach einer bestimmten Anzahl von Zeitschritten $\triangle t$ zeitlich abhängige Kurven der gefundenen Strukturen ermittelt und an die Ausgabekomponente weitergeleitet werden.

6. Analytisches Informationssystem nach einen der vorangehenden Ansprüche, dadurch gekennzeichnet,
daß die in der Auswertekomponente ermittelten zeitabhängigen Strukturen mittels bekannter Korrelationsverfahren hinsichtlich einer Gesamtfunktion untersucht werden, die in der Ausgabekomponente dargestellt wird.

7. Analytisches Informationssystem nach Anspruch 6, dadurch gekennzeichnet,
daß die zeitabhängigen Strukturen normiert werden, bevor eine Gesamtfunktion ermittelt wird.

Fig. 1

Fig. 2

Fig. 3

Fig. 4

Fig. 5

Fig. 6